(19) Europäisches Patentamt

European Patent Office

Office européen des brevets

(11) Veröffentlichungsnummer: **0 293 402 B1**

(12) **EUROPÄISCHE PATENTSCHRIFT**

(45) Veröffentlichungstag der Patentschrift:
27.02.91 Patentblatt 91/09

(51) Int. Cl.⁵: **F16H 37/12, F16H 21/44,**
**B29C 45/42, B22D 17/20,**
**B29C 37/00, B23Q 16/00**

(21) Anmeldenummer: 87906996.1

(22) Anmeldetag: 02.11.87

(86) Internationale Anmeldenummer:
PCT/DE87/00494

(87) Internationale Veröffentlichungsnummer:
WO 88/03238 05.05.88 Gazette 88/10

(54) ANTRIEB UND POSITIONIERUNG EINES SCHLITTENS.

(30) Priorität: 31.10.86 DE 3637195
14.02.87 DE 3704669

(43) Veröffentlichungstag der Anmeldung:
07.12.88 Patentblatt 88/49

(45) Bekanntmachung des Hinweises auf die
Patenterteilung:
27.02.91 Patentblatt 91/09

(84) Benannte Vertragsstaaten:
AT BE CH DE FR GB IT LI NL SE

(56) Entgegenhaltungen:
DE-A- 3 444 168
FR-A- 1 562 169
FR-A- 2 049 536
US-A- 2 789 683

(73) Patentinhaber: WALDORF, Veronika
Stahringer Str.10a
D-7768 Stockach 14 (DE)
Patentinhaber: GAIGL, Karl-Josef
Stahringer Str.10a
D-7768 Stockach 14 (DE)

(72) Erfinder: WALDORF, Veronika
Stahringer Str.10a
D-7768 Stockach 14 (DE)
Erfinder: GAIGL, Karl-Josef
Stahringer Str.10a
D-7768 Stockach 14 (DE)

(74) Vertreter: Weiss, Peter, Dr. rer.nat.
Patentanwalt, Schlachthausstrasse 1,
Postfach 466
D-7700 Singen a.H. (DE)

## Beschreibung

Die Erfindung betrifft eine Vorrichtung zum Umsetzen einer Drehbewegung eines exzentrisch um eine Drehachse angeordneten Mitnehmers in eine Linearbewegung eines Schlittens entsprechend dem Oberbegriff von Anspruch 1.

Eine derartige Vorrichtung zeigt beispielsweise die DE-A-34 44 168. Dort dreht zusammen mit dem in Führungsrinne eingreifenden Mitnehmer ein weiterer Mitnehmer um den gleichen Mittelpunkt, der in zumindest eine Aufnahmerinne eingreift, wenn der Mitnehmer außer Eingriff mit dem Führungskanal gelangt. Soll dort die Endlage gesichert sein, so muß dieser Führungskanal den gleichen mittleren Radius aufweisen, wie der weitere Mitnehmer um den Mittelpunkt. Hierbei wird zwar anfänglich der als Kurvenplatte ausgebildete Schlitten in der Endlage gut gehalten. Taucht jedoch der weitere Mitnehmer tiefer in die Aufnahmerinne ein, so wird die Halterung des Schlittens in seiner Endlage mehr und mehr verschlechtert, da die Bewegungsrichtung des Mitnehmers sich mehr und mehr der Bewegungsrichtung des Schlittens angleicht.

Demgegenüber hat sich der Erfinder die Aufgabe gestellt, eine Vorrichtung der oben genannten Art zu entwickeln, bei welcher der Schlitten in exakt definierten Endlagen festgehalten, ansonsten aber frei bewegbar ist.

Zur Lösung dieser Aufgabe führt eine oben beschriebene Vorrichtung zusammen mit dem Merkmalen des Kennzeichnenden Teils von Anspruch 1.

Der Vorteil dieser Erfindung ist, daß diese Laufrollen an beliebigen Stellen des Schlittens oder Dreharms angeordnet sein können und daß ebenso die Lage der Leistenstücke völlig unabhängig vom Schlitten bzw. dem Dreharm sind. Die Leistenstücke müssen nur zu den Laufrollen den Bezug haben, daß die Laufrollen das ihnen jeweils zugeordete Leistenstück dann verlassen, wenn die Führungsrolle in die Führungsrinne einfährt. Dabei ist es gleichgültig, wie weit der Schlitten seine Endlage überfährt, da die Festlegung der Endlage von den vom Schlitten bzw. Dreharm unabhängigen Leistenstücken übernommen wird. Bevorzugt werden als Anschläge Laufrollen benutzt, jedoch sind hier im Rahmen der Erfindung auch andere Anschläge, wie beispielsweise Schienenstreifen, bolzen od. dgl. denkbar.

Um nun ein Halten der Laufrollen oder Anschläge an dem jeweiligen Leistenstück zu gewährleisten sollte jeder Laufrolle ein in Bewegungsrichtung der Laufrolle zum Leistenstück hingerichteter weiterer Anschlag zugeordnet sein. In einem einfachen Ausführungsbeispiels könnte dies eine weitere Laufrolle, Schiene od. dgl. sein, die andererseits der jeweiligen Laufrolle dem Leistenstück anliegt. D. h., das Leistenstück wird zwischen den beiden Anschlägen aufgenommen. Hierdurch ist es beispielsweise auch möglich, wenn gewünscht, das Leistenstück gekrümmt auszubilden, so daß der Schlitten in seiner Endlage dieser Krümmung folgt. Wird zum Beispiel der Schlitten zum Ein- und Ausfahren einer Entnahmevorrichtung zwischen zwei Formhälften einer Kunststoffspritzgießmaschine benutzt, so können hierdurch die entnommenen Gegenstände weiter entfernt von der eigentlichen Maschine abgelegt werden.

Soll jedoch eine einmal erreichte Endlage des Schlittens exakt eingehalten werden, so genügt es, wenn an dem Schlitten oder dem Dreharm weitere Anschlagbolzen festgelegt sind, welche in dem Augenblick auf einen festen Anschlag treffen, in dem die jeweilige Laufrolle dem Leistenstück aufgleitet. In diesem Fall sollte dann das Leistenstück gerade und senkrecht zur Bewegungsrichtung des Schlittens verlaufen. Zum Nachstellen gewisser Paßungenauigkeiten ist es vorteilhaft, die Anschlagbolzen verstellbar auszubilden.

Selbstverständlich könnten anstelle von weiteren Anschlägen die Leistenstücke auch als U-förmige Rinnen ausgebildet sein, in die die jeweilige Laufrolle eingleitet. Allerdings würde hier zwischen der Laufrolle und dem U-Profil eine erhebliche negative Reibung entstehen, welche bei der anderen, bevorzugten Anschlagkonfiguration nicht gegeben ist.

Die Bewegung der Führungsrolle geschieht bevorzugt über ein Zahnrad, welches eine Zahnstange kämmt, wobei entweder die Zahnstange im Verhältnis zum Zahnrad oder das Zahnrad im Verhältnis zur Zahnstange bewegbar ist. Dabei kommt es darauf an, ob der Schlitten beispielsweise einer bewegbaren Formhälfte aufgesetzt ist und eine Arbeitseinrichtung für diese Formhälfte ein- bzw. ausfahren soll, oder ob er der feststehenden Formhälfte aufsitzt. Die Zahnstange ist jeweils der anderen Formhälfte zugeordnet.

Bevorzugt werden die Leistenstücke mit der Zahnstange, in der Regel auf der der Zahnung abgewandten Seite verbunden. Dabei überragen sie die Zahnstange, so daß die Laufrollen beim Überfahren der jeweiligen Steuerkante ihres Leistenstückes auch über die Zahnstange hinweggleiten können.

Wenn Drehachse, Zahnrad und Schlitten zusammen an bzw. in einem Montageblock angeordnet sind, ergibt sich daraus eine kompakte Vorrichtung, welche leicht montier- und gegenüber der Zahnstange bzw. den Leistenstücken einstellbar ist. Bei richtiger Justierung verläßt die die Endlage bestimmende Laufrolle in dem Augenblick ihr Leistenstück, wenn die Führungsrolle in die Führungsrinne eingreift. Dann wird die sichere Führung des Schlittens von der Führungsrolle übernommen, während die Laufrolle durch die Öffnung zwischen den beiden Leistenstücken hindurch und über die Zahnstange hinweggleitet. Gegen Ende der Führung durch die Führungsrolle gleitet die zweite Laufrolle ebenfalls durch die Öffnung zwischen den beiden Leistenstücken, läuft dann aber auf das ihr zugeordnete Leistenstück auf. Hierbei müssen die Leistenstücke nicht in einer Linie liegen, sondern könnten auch versetzt zueinander angeordnet sein. Sie müssen nur einen Durchlaß für die zweite Rolle bilden, damit diese ihr Leistenstück im Verhältnis zur anderen Laufrolle hintergreifen kann.

Diese oben beschriebene Vorrichtung weist eine starre mechanische Kopplung infolge der Anschläge und der in die Führungsrinne eingreifenden Führungsrolle auf, wobei es wünschenswert sein kann, den Schlitten auch unabhängig von einer ihn normalerweise bewegenden Antriebseinrichtung wie Zahnstange und Zahnrad zu verschieben oder ihn gänzlich vom Betrieb der Werkzeugmaschine abzukuppeln.

Beispielsweise bei der Beseitigung von auftretenden Störungen oder Reparaturen kann es notwendig werden, den Schlitten in eine seiner Endlagen zu bewegen und dort festzulegen. Hierzu dient erfindungsgemäß eine Einrichtung, welche zumindest aus einem Rastbolzen besteht, der in Rastlage mit einer Klinke zusammenwirkt. Dabei soll der Rastbolzen mit einem Querbolzen einem von einem Profilstreifen gebildeten Auflager aufliegen und von diesem gegen die Kraft einer Feder zum Lösen der Rastverbindung anhebbar sein. Das Anheben geschieht über einen exzentrisch drehbaren Bolzen, wobei der Profilstreifen zwischen diesem Bolzen und dem Auflager einen Drehpunkt besitzt.

Da jedoch sowohl während dem Führen des Schlittens wie auch in dessen Endlage immer entweder Laufrollen mit Leistenstücken bzw. die Führungsrinne mit der Führungsrolle in Eingriff stehen, muß zur Eröffnung der Möglichkeit eines manuellen Verschiebens entweder eine Laufrolle anhebbar sein, damit sie über das ihr zugeordnete Leistenstück hinweggleiten kann, oder aber die Führungsrinne muß anhebbar sein. In einer bevorzugten Ausführungsform ist beides möglich. Der Einfachheit halber wird dabei der Profilstreifen über ein Gelenk mit einem weiteren Streifen verbunden, der an seinem fernen Ende einen Drehpunkt zum Schlitten hat und ein dazwischen liegendes Langloch aufweist, in welches ein mit der Laufrolle verbundener Querbolzen eingreift. Beim Drehen des exzentrisch gelagerten Bolzens wird dann gleichzeitig der Rastbolzen abgesenkt und eine Laufrolle angehoben.

Wenn in diesem Fall die Führungsrolle außer Eingriff mit der Führungsrinne steht, kann der Schlitten in seine äußere Endlage manuell verfahren werden.

Über den exzentrisch gelagerten Bolzen soll es jedoch auch möglich sein, einen Schenkel der Führungsrinne anzuheben, so daß auch die Führungsrolle frei ist.

Im Rahmen der Erfindung liegt es auch, daß dem Schlitten ein weiterer Schlitten aufgesetzt ist, wobei ein Zahnrad mit dem Schlitten eine Drehachse bildet und dieses Zahnrad einerseits eine in Fahrtrichtung des Schlittens im Verhältnis zum Schlitten festliegende Zahnstange abrollt und andererseits eine an dem aufgesetzten Schlitten festliegende Zahnstange kämmt. Hierdurch ist die Übersetzung einer relativ geringeren Fahrbewegung des ersten Schlittens in einen größeren Weg des zweiten Schlittens möglich. Die Wahl des Verhältnisses hängt im wesentlichen vom Durchmesser des Zahnrades ab.

Sowohl der erste wie auch der zweite Schlitten können bereits das entsprechende Handling, zum Vollführen der Arbeitsvorgänge zwischen beispielsweise zwei Formhälften einer Spritzgußmaschine tragen. Es kann aber auch notwendig werden, daß dem zweiten Schlitten nochmals ein dritter Schlitten aufgesetzt ist, der beispielsweise in Richtung des Öffnungshubes des Werkzeuges der Spritzgußmaschine verfahrbar ist. Dieses weitere Verfahren des dritten Schlittens erfolgt beispielsweise pneumatisch, so daß das Handling näher an das ihr zugeordnete Werkzeugteil führbar ist.

In diesen o. g. Ausführungsbeispielen hat es ich in der Praxis erwiesen, daß der Schlitten, welcher direkt von der Führungsrolle bewegt wird, eine erhebliche Wartung beim Betrieb bedarf. Bei ihm muß laufend, insbesondere in den Schienen eine Schmierung erfolgen, ein Trockenlauf ist nicht möglich. Ferner müssen in vielen Fällen Vorkehrungen getroffen werden, um eine Übersetzung der relativ kurzen Schlittenbewegung auf weitere Schlitten zu gewährleisten. Dies erhöht den Materialaufwand der Vorrichtung und beispielsweise auch dessen Gewicht, was die Dynamik der gesamten Vorrichtung ungünstig beeinflußt. Die Folge ist ein höherer Verschleiß. Ferner wirken sich die durch die dauernde Schmierung erzeugten Schmutzpartikel ungünstig auf Spritzgießmaschinen aus, welche beispielsweise in einem Reinraum Anwendung finden sollen. Ferner ist der Anwender durch die Kompaktheit des gesamten Schlittenantriebes an eine bestimmte Platzierung im Verhältnis zur Werkzeugmaschine gebunden, so daß er sich nicht den kräftemäßig günstigsten Platz aussuchen kann.

Diese Nachteile werden durch ein weiteres Ausführungsbeispiel der Erfindung beseitigt. Bei diesem Ausführungsbeispiel sind Schlitten und eigentlicher Schlittenantrieb entkoppelt und lediglich über eine Führungsstange verbunden. Damit ist der Anwender in der Platzierung der einzelnen Vorrichtungsteile wesentlich variabler. Ferner können durch die Ausführung der Führungsstange bzw. zusätzlichem Einsatz weiteren Gestänges die Bewegungen des Schlittenantriebes auf die bewegung des Schlittens leicher umgesetzt werden.

Erfindungsgemäß wird der Schlittenantrieb durch einen Dreharm bewirkt, an welchem dann auch die Laufrollen vorgesehen sind.

In dem gezeigten Ausführungsbeispiel macht dieser Dreharm beispielsweise eine Schwenkbewegung von lediglich ca. 80°, wobei je nach Länge des Dreharmes ein entsprechender gewünschter Hub des Schlittens erfolgen kann.

Dieser Dreharm besitzt einen Drehpunkt mit einem Schlittengehäuse, welches der Einfachheit halber einer Formhälfte der Werkzeugmaschine aufgesetzt ist. Bei diesem Drehpunkt können Kugellager verwendet werden, welche keiner Wartung bedürfen und welche hermetisch abgeschlossen sind, so daß weder Schmutz- noch Staubpartikel, bei der Schwenkung des Dreharmes erzeugt werden.

Bei dieser Anordnung können dann auch Schlitten für die Greifwerkzeuge Anwendung finden, welche nicht in Schienen geführt sind, sondern trocken laufen können. Eine laufende Schmierung dieses Schlittens entfällt dann.

An dem Dreharm sind dann zwei Kanalstreifen vorgesehen, welche wiederum die Führungsrinne für die Führungsrolle bilden. Die Konfiguration exzentrisch angeordnete Führungsrollen, Zahnrad, Zahnstange entspricht dann den o. g. Ausführungsbeispielen. Vom Bewegungsablauf ist lediglich insofern eine Abwandlung gegeben, als die Drehbewegung der Führungsrollen nicht direkt in eine Linearbewegung des Schlittens umgesetzt wird, sondern die Schwenkbewegung des Dreharmes dazwischengeschaltet ist. Allerdings entfällt hier die Zwischenschaltung von einem Schlitten zur Umsetzung einer kürzeren Linearbewegung auf eine länger Linearbewegung eines zweiten oder gar dritten Schlittens.

Dies bringt eine erhebliche Kosteneinsparung mitsich.

Erfindungsgemäß soll natürlich auch dieser Schlittenantrieb von der bewegung der Spritzgießmaschine abkoppelbar sein. Zu diesem Zweck ist ein Kanalstreifen so ausgebildet, daß er aus dem Eingriffbereich der Führungsrollen herausgezogen werden kann. Dies geschieht bevorzugt über beispielsweise eine Kolbenstange eines Pneumatikzylinders, welche mit dem Kanalstreifen verbunden ist und diesen entlang dem Dreharm in einer entsprechenden Führung verschiebt. Der Einfachheit halber wird diese Pneumatikzylinder mit dem Dreharm verbunden sein.

Durch das Entfernen des Kanalstreifens aus dem Eingriffsbereich der Führungsrollen wird gewährleistet, daß die Führungsrolle bei einer Drehung, d. h. bei einer stattfindenden Bewegung der Werkzeugmaschine zwar in jedem Fall den Dreharm so schwenkt, daß das Greifwerkzeug bzw. der das Greifwerkzeug tragende Schlitten aus dem Bereich zwischen den beiden Formhälften herausgefahren wird. Dagegen wird der Dreharm durch eine entgegengesetzte Bewegung der Formhälften d. h. beim Schließen von der Führungsrolle nicht mitgenommen, da der besagte Kanalstreifen außer Eingriff gebracht worden ist. Durch diese Anordnung ist gewährleistet, daß das Greifwerkzeug in jedem Fall beim Schließen der Formhälften aus dem Bereich zwischen beiden Formhälften herausgefahren wird und keinen Beschädigungen ausgesetzt ist.

Zum Abkoppeln dieses Schlittenantriebes sind erfindungsgemäß mit dem Zylinder bzw. der Bewegung des Kanalstreifens auch Einrichtungen gekoppelt, welche beispielsweise ein Anheben einer Laufrolle und/oder ein Absenken einer Rastklinke bewirken.

Der Einfachheit halber wird durch das Ausfahren der Kolbenstange aus dem Zylinder ein Kulissenstreifen bewegt, welcher über entsprechende Hebelanordnungen mit der Laufrolle bzw. einer Rastklinke verbunden ist. Hierdurch ist es möglich, die Laufrolle so anzuheben, daß sie das ihr zugeordnete Leistenstück überfahren kann. Der Rastklinke wiederum ist eine entsprechende Aufnahme am Schlittengehäuse zugeordnet, so daß der Dreharm festgelegt werden kann.

Soll die Entnahmevorrichtung wieder in den Arbeitsgang der Werkzeugmaschine eingeschaltet werden, so genügt eine Einziehen der Kolbenstange, so daß der Kanalstreifen wieder in seine Ausgangsposition zurückgelangt. Gleichzeitig wird die Laufrolle abgesenkt und die Rastklinke angehoben, so daß die Sperre aufgehoben ist. bei der nächsten Drehung bietet sich nun für die Führungsrolle wieder die bekannte Führungsrinne an und der Dreharm kann geschwenkt werden.

Ferner kann es auch erforderlich sein, daß der Montageblock bzw. das Schlittengehäuse selbst nicht gegenüber dem Werkzeug festliegt, sondern auf einer schiene verschiebbar ruht. Diese Schiene kann beispielsweise wiederum einem beistelltisch aufgesetzt sein, der neben die eigentliche Werkzeugmaschine bzw. Spritzgießmaschine gestellt wird. In diesem Fall kann es beispielsweise geeigneter erscheinen, daß die Leistenstücke mit der Schiene verbunden sind und ferner auch die Hauptzahnstange an dem beistelltisch oder der Schiene festliegt.

Deshalb liegt im Rahmen der Erfindung auch eine Werkzeugmaschine zum Herstellen oder bearbeiten von Werkstücken, wie beispielsweise eine Spritzgießmaschine, Presse, Stanze od. dgl., mit zwei relativ zueinander bewegbaren Werkzeugteilen, wobei zumindest einem Werkzeugteil die oben genannte Vorrichtung zugeordnet ist. Speziell bezogen auf das Ausführungsbeispiel einer Kunststoffspritzgießmaschine kann dann diese Vorrichtung mit Ausnahme der Schiene und des beistelltisches mit der festliegenden oder bewegbaren Formhälfte fest verbunden sein. Es ist aber auch möglich, und dies gilt insbesondere für das Nachrüsten bereits installierter Werkzeugmaschinen, daß die Vorrichtung mit Schiene und Beistelltisch zumindest mit einem Werkzeugteil bzw. dessen Träger über eine Kupplungseinheit lösbar gekoppelt ist. Das bedeutet, daß der gesamte Roboter auf dem beistelltisch neben das Werkzeug gestellt werden kann. Selbstverständlich kann es im Einzelfall notwendig sein, daß der beistelltisch über entsprechende Streben mit dem Tragrahmen der Werkzeugmaschine verbunden wird. Notwendig erscheint dies aber nicht in jedem Fall.

Als Kupplungseinheit hat sich beispielsweise ein einfacher, mit dem Schlittengehäuse verbundener Anschlußbolzen als praktikabel erwiesen, welcher zum Ankuppeln zwischen zwei Schenkel einer an dem Werkzeugteil bzw. dessen Träger festliegender befestigungslasche eingreift. Ein Abkuppeln der Vorrichtung geschieht einfach dadurch, daß der Anschlußbolzen zurückgezogen wird. Hierbei sollte jedoch das Zurückziehen so begrenzt sein, daß der Anschlußbolzen und damit das Schlittengehäuse beim Schließen des Werkzeuges immer mitgenommen wird.

Hierdurch wird gewährleistet, daß die Handlingseinrichtung auf jeden Fall beim Schließen des Werkzeugs aus der Werkzeugöffnung entfernt wird und damit keinen Schaden erleiden kann. Im vorliegenden Fall besteht die einfachste Möglichkeit darin, daß der Schenkel, welcher den Anschlußbolzen beim Öffnen des Werkzeuges mitnimmt, verkürzt ausgebildet wird. Wird dann der Anschlußbolzen zurückgezogen, so gleitet der kürzere Schenkel beim Öffnen des Werkzeuges an ihm vorbei und nimmt das Schlittengehäuse nicht mit. Auf diese Weise können Arbeiten zwischen den beiden Formhälften vorgenommen werden, bei denen eine eingefahrene Handlingseinheit nur stören würde. Sollte trotzdem, aus welchen Gründen auch immer, ein zumindest teilweises Einfahren der Handlingseinheit erfolgen, so wird diese durch den längeren Schenkel auf jeden Fall beim Schließen des Werkzeuges aus der Werkzeugöffnung verfahren.

Wird dagegen in einer bevorzugten Ausführungsform der Schlittenantrieb von dem Schlitten entkoppelt und über den oben beschriebenen Dreharm bewirkt, so hat es sich in der Praxis als günstig erwiesen, den Dreharm zusammen. mit dem Schlittengehäuse beispielsweise der bewegbaren Formhälfte aufzusetzen, während die Führung für den Schlitten mit dem Greifwerkzeug seitlich an die Formhälfte angeformt ist. Sollte es sich hier als kräftemäßig ratsam erweisen, den Schlittenantrieb beispielsweise andererseits von der Schlittenführung an der Formhälfte vorzusehen, so kann dies über eine entsprechende Auslegung der Führungsstange ohne weiteres bewirkt werden. Da die Position der Zahnstange in Bezug auf die Werkzeugmaschine keinerlei Bedeutung hat, kann auch der Schlittenantrieb an jeder beliebigen Stelle der Formhälfte angeordnet werden.

Weitere Vorteile, Merkmale und Einzelheiten der Erfindung ergeben sich aus der nachfolgenden Beschreibung bevorzugter Ausführungsbeispiele sowie anhand der Zeichnung ; diese zeigt in

Fig. 1 eine Draufsicht auf eine erfindungsgemäße Vorrichtung zum Umsetzen einer Drehbewegung in eine Linearbewegung ;

Fig. 2 eine Seitenansicht der erfindungsgemäßen Vorrichtung nach Fig. 1 ;

Fig. 3 einen Querschnitt durch ein weiteres Ausführungsbeispiel einer erfindungsgemäßen Vorrichtung nach Fig. 1 entlang Linie A - A ;

Fig. 4 eine perspektivische, teilweise gebrochene Ansicht der erfindungsgemäßen Vorrichtung mit ausgefahrenem Handling in der Ausführungsform als Beistellaggregat ;

Fig. 5 eine perspektivische, teilweise gebrochene Ansicht der Vorrichtung nach Fig. 4 mit eingefahrenem Handling ;

Fig. 6 Eine schematische Darstellung eines Querschnitts durch eine Spritzgießmaschine mit entkoppeltem Schlittenantrieb und Schlitten mit Greifwerkzeug ;

Fig. 7 eine teilweise gebrochen dargestellte Draufsicht auf einen entkoppelten Schlittenantrieb gemäß Fig. 6 ;

Fig. 8 eine Seitenansicht des Schlittenantriebs nach Fig. 7.

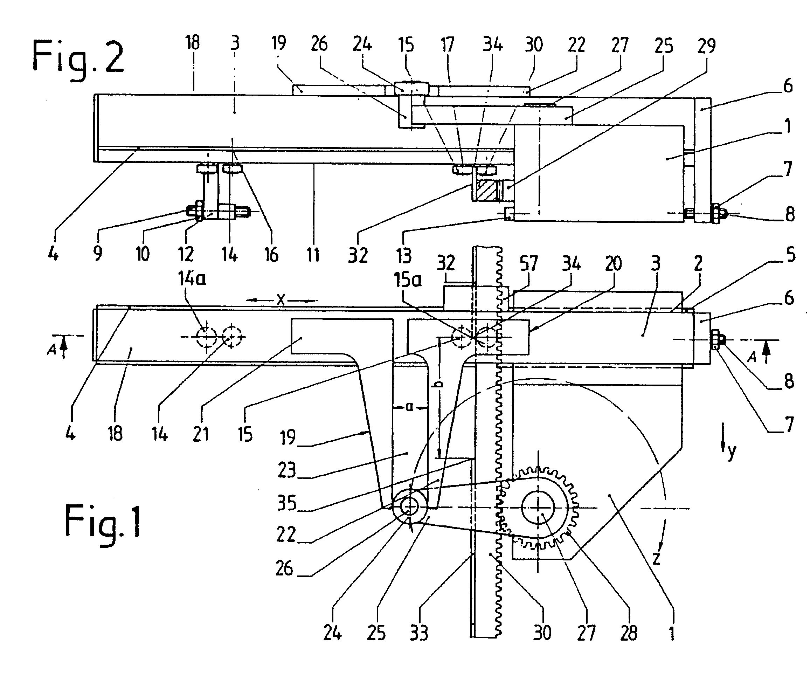

Eine erfindungsgemäße Vorrichtung zum Umsetzen einer Drehbewegung in eine Linearbewegung weist gemäß Fig. 1 einen Montageblock 1 auf, in den eine Rinne 2 zum Führen eines Schlittens 3 eingeformt ist. An diesem Schlitten 3 sind seitlich Schienen 4 angeformt, welche in entsprechenden Nuten 5 in der Rinne 2 gleiten.

Stirnwärtig ist an dem Schlitten 3 eine Leiste 6 festgelegt, welche von einem über eine Mutter 7 verstellbaren Schraubenbolzen 8 durchsetzt ist. Dieser Schraubenbolzen 8 dient als Anschlag des Schlittens 3 auf der einen Seite des Montageblocks 1.

Ein weiterer Anschlagbolzen 9, der ebenfalls über eine Mutter 10 verstellbar ist, wird andererseits des Montageblocks 1 vor einer von der Unterseite 11 des Schlittens 3 abkragenden Zunge 12 gehalten. Dieser Anschlagbolzen 9 kann auf einen am Montageblock 1 festgelegten Anschlag 13 auflaufen.

An der Unterseite des Schlittens 3 befinden sich ferner zwei Laufrollen 14 und 15, deren Laufachsen 16 und 17 senkrecht zur Bewegungsrichtung x des Schlittens 3 angeordnet ist. Diesen Laufrollen 14, 15 können noch zwei weitere Laufrollen 14a und 15a zugeordnet sein.

Auf der Oberseite 18 des Schlittens 3 sind zwei Winkel 19 und 20 festgelegt, welche mit jeweils einem Schenkel 21 und 22 seitlich über den Schlitten 3 hinausragen. Die Schenkel 21 und 22 halten einen Abstand a ein, so daß zwischen den Schenkeln 21 und 22 eine Führungsrinne 23 ausgebildet ist.

In die Führungsrinne 23 greift eine Führungsrolle 24 ein, welche an einem Hebel 25 über eine Drehachse 26 festgelegt ist. Andernends der Drehachse 26 sitzt der Hebel 25 einem Drehbolzen 27 auf, welcher in den Montageblock 1 eingesetzt ist. Im Montageblock 1 selbst sitzt ein Zahnrad 28, welches von dem Drehbolzen 27 axial durchquert wird. Ein Teilbereich 29 (siehe Fig. 2) des Zahnrads 28 ragt aus dem Montageblock 1 heraus und kämmt dort eine Zahnstange 30. Diese Zahnstange 30 ist, nicht gezeigt, an einer, der Übersichtlichkeit halber nicht dargestellten, Stelle einer Anlage, beispielsweise einer feststehenden Formhälfte einer Spritzgußmaschine zum Herstellen von Kunststoffprodukten, festgelegt.

Der Rückseite 31 der Zahnstange 30 sind zwei Leistenstücke 32 und 33 aufgesetzt, welche in einem Abstand b zueinander angeordnet sind.

Die oben beschriebene Vorrichtung arbeitet folgendermaßen:

Sobald sich die Vorrichtung in Richtung y bewegt oder die Zahnstange 30 in entgegengesetzte Richtung gezogen wird, rollt das Zahnrad 28 die Zahnstange 30 ab und bewegt den Hebel 25 in Richtung z. Dabei greift die Führungsrolle 24 in die Führungsrinne 23 zwischen die beiden Schenkel 21 und 22 ein. In diesem Augenblick überfährt die Laufrolle 15 eine Steuerkante 34 des Leistenstücks 32, so daß die Laufrolle 15 die Zahnstange 30 überfahren kann. Vor dem Überfahren wird der Schlitten 3 von der auf der Leiste 32 abrollenden Laufrolle 15 und dem andererseits an dem Montageblock 1 anschlagenden Schraubenbolzen 8 in einer gesicherten Endlage gehalten.

Nach dem Überfahren der Steuerkante 34 ist die Laufrolle 15 frei und kann innerhalb des Abstandes b über die Zahnstange 30 hinweggleiten.

Nach einer Drehung der Führungsrolle 24 um 180° in Drehrichtung z unter Mitnahme des Schlittens 3 ist auch die Laufrolle 14 in den bestand b eingefahren und läuft nun von innen her auf das Leistenstück 33 auf. Gleichzeitig schlägt der Anschlagbolzen 9 am Anschlag 13 an, so daß wiederum der Schlitten 3 in einer gesicherten Endlage gehalten wird.

In beiden Endlagen kann die Führungsrolle 24 aus der Führungsrinne 23 herausfahren, ohne daß hierdurch die Endlage des Schlittens 3 verändert wird. Anstelle der beiden Anschlagbolzen 8 und 9 können auch den beiden Laufrollen 14 und 15 weitere Rollen 14a und 15a zugeordnet sein, die zu den Laufrollen 14 und 15 einen Zwischenraum bilden, in den das jeweilige Leistenstück 32 bzw. 33 einfahren kann. Auch hierdurch wird für den Schlitten 3 eine gesicherte Endlage bewirkt.

Zum Bewegen des Schlittens 3 in die umgedrehte Richtung wird die Vorrichtung in entgegengesetzte Richtung entlang der Zahnstange 30 bewegt und dadurch der Hebel 25 entgegen der Drehrichtung z gedreht. Die Führungsrolle 24 greift wiederum in die Führungsrinne 23 ein, wobei in diesem Augenblick die Laufrolle 14 eine Steuerkante 35 des Leistenstücks 33 überfährt und aus dem Abstand b herausgleiten kann. Nach einer Drehung um 180° verläßt die Führungsrolle 24 die Führungsrinne 23, wobei gleichzeitig die Laufrolle 15 auf die Steuerkante 34 aufläuft und der Schraubenbolzen 8 an dem Montageblock 1 anschlägt.

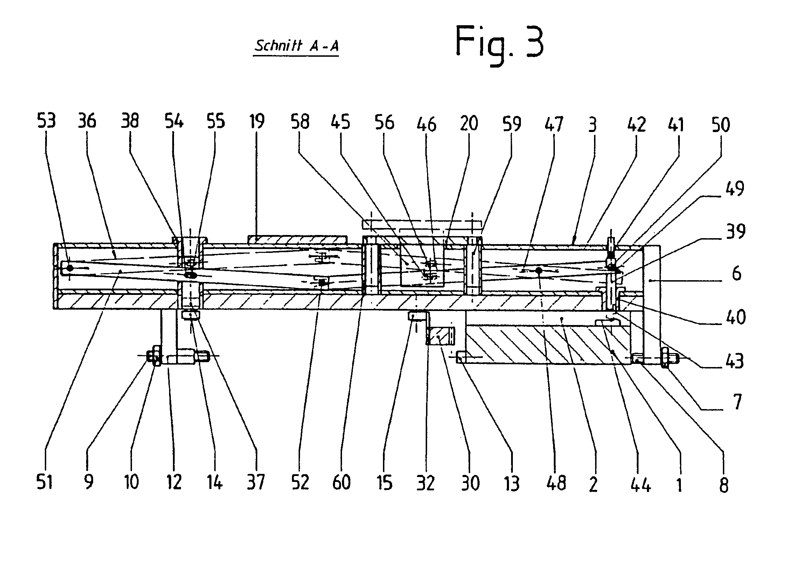

In Fig. 3 ist ferner eine Einrichtung 36 zum Halten der erfindungsgemäßen Vorrichtung in einer gesicherten Endlage beim beispielsweise manuellen Verschieben der Vorrichtung gezeigt. Zu diesem Zweck ist die Laufrolle 14 mit einer Gleithülse 37 verbunden, welche in einer Buchse 38 in dem Schlitten 3 geführt ist.

Gegenüber der Laufrolle 14 durchsetzt ein Rastbolzen 39 den Schlitten 3, wobei er zumindest teilweise ebenfalls in einer Führung 40 gleitet. Dieser Rastbolzen 39 stützt sich in dem Schlitten 3 über eine Schraubenfeder 41 gegen eine Innenfläche 42 des Schlittens 3 ab. Andererseits weist er eine Rastnase 43 auf, welche beim Absenken des Rastbolzens 39 mit einer Klinke 44 in Verbindung gebracht werden kann.

Zum Anheben und Absenken der Laufrolle 14 bzw. des Rastbolzens 39 ist zwischen beiden ein exzentrisch gelagerter Bolzen 45 vorgesehen, der in ein Langloch 46 eines Profilstreifens 47 eingreift. Dieser Profilstreifen 47 weist einen Drehpunkt 48 zwischen Langloch 46 und einem Auflager 49 auf, wobei er mit diesem Auflager 49 einen Querbolzen 50 untergreift, welch letzterer den Rastbolzen 39 quert.

Andernends des Auflagers 49 ist der Profilstreifen 47 mit einem weiteren Streifen 51 über ein Gelenk 52 verbunden, wobei der Streifen 51 an seinem gegenüberliegenden Ende einen Drehpunkt 53 im Schlitten 3 bildet. Zwischen dem Drehpunkt 53 und dem Gelenk 52 ist in dem Streifen 51 ein weiteres Langloch 54 vorgesehen, in welches die Gleithülse 37 mit einem Querbolzen 55 eingehängt ist.

Bei Drehung des exzentrisch gelagerten Bolzens 45 um eine Drehachse 56, beispielsweise über ein in Fig. 1 angedeutetes Drehrad 57, wird der Profilstreifen 47 um seinen Drehpunkt 48 gedreht und der Rastbolzen 39 aus dem Schlitten 3 ausgefahren. Gleichzeitig wird über das Gelenk 52 auch der Streifen 51 angehoben und so die Laufrolle 14 in die buchse 38 eingezogen.

Nun kann die Laufrolle 14 das Leistenstück 33 überfahren und der Schlitten 3 über die in die Klinke 44 einrastende Rastnase 43 sowie den in diesem Augenblick im Montageblock 1 anschlagenden Schraubenbolzen 8 in einer Endlage gehalten werden. Zum Lösen dieser Einrichtung 36 wird der Bolzen 45 in seine Ausgangslage zurückgedreht, wobei der Profilstreifen 47 den Rastbolzen 39 anhebt und gleichzeitig über den Streifen 51 die Laufrolle 14 abgesenkt wird.

Ferner ist vorgesehen, daß auch der Winkel 20 anhebbar ausgestaltet ist. Das Anheben kann über den gleichen exzentrisch gelagerten Bolzen 45 erfolgen, wobei dieser in ein entsprechendes Langloch in einer mit dem Winkel 20 verbundenen Zunge 58 eingreift. Zur besseren Führung des Winkels 20 sind mit ihm beidseits Gleitbolzen 59 verbunden, welche in entsprechenden Führungshülsen 60 lagern.

Durch dieses Anheben des Winkels 20 ist es möglich, diesen außer Eingriff mit der Führungsrolle 24 zu bringen bzw. die Führungsrolle 24 kann ungehindert in der Drehrichtung z bewegt werden, ohne daß sie ungewollt auf die Rückseite des Winkels 20 auftrifft, während der Schlitten 3 in seiner Endlage fixiert ist.

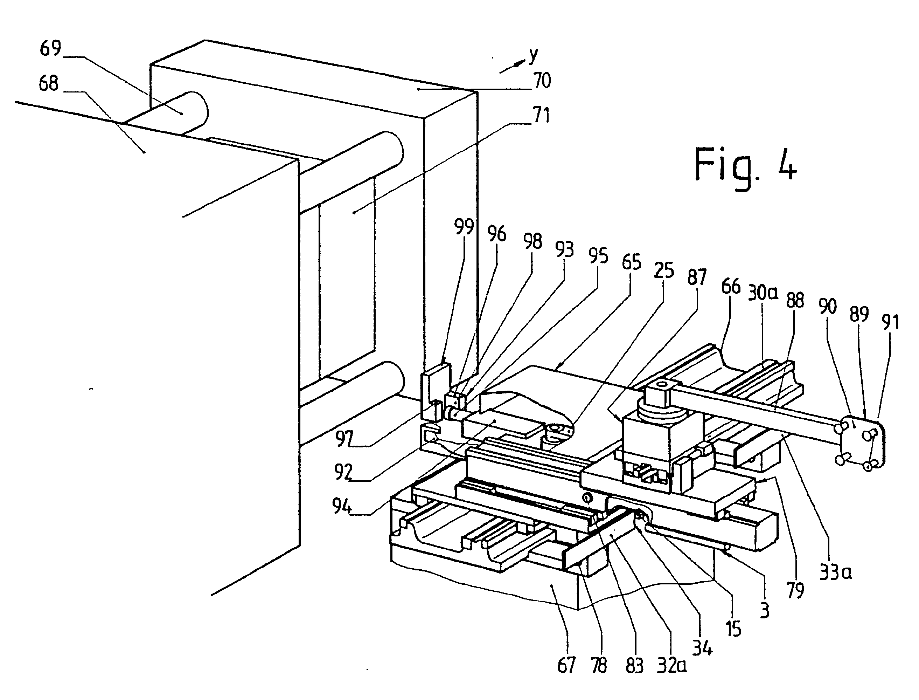

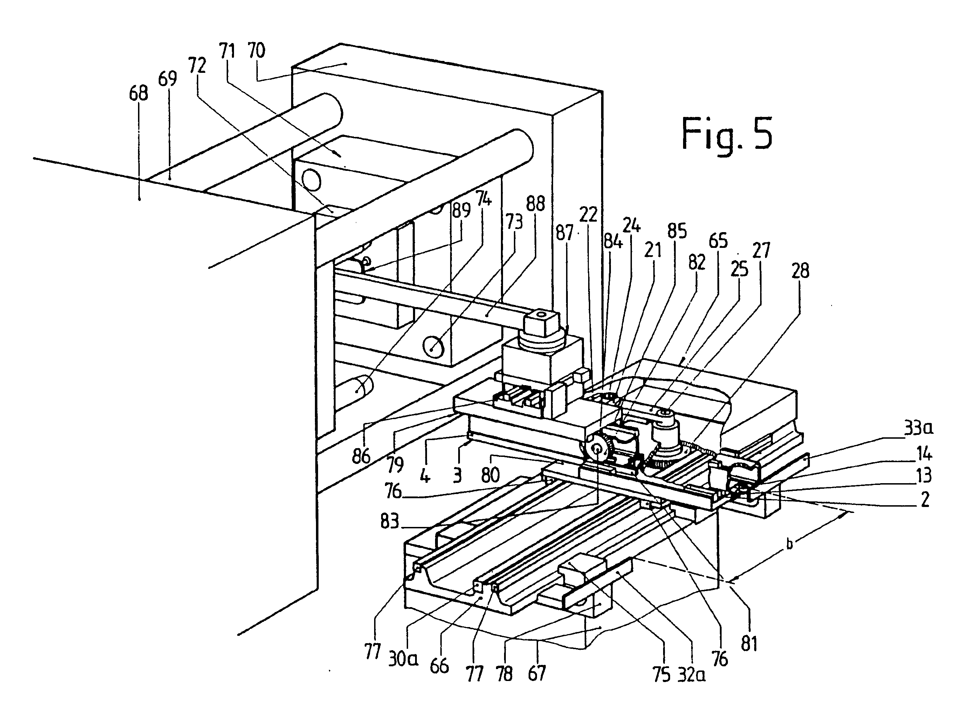

Gemäß den Figuren 4 und 5 ist in diesem Ausführungsbeispiel der Montageblock als ein Schlittengehäuse 65 ausgeführt. Dieses Schlittengehäuse 65 wird in einer Schiene 66 geführt, wobei diese Schiene 66 einem Beistelltisch 67 aufsitzt. Der Beistelltisch 67 wird in Gebrauchslage als gesondertes Aggregat neben eine Spritzgußmaschine gestellt, von der eine feststehende Formhälfte 68 und eine an Führungssäulen 69 führbare bewegliche Formhälfte 70 gezeigt sind.

In Fig. 5 befindet sich die bewegliche Formhälfte 70 in Öffnungslage, während in Fig. 4 die Schließlage dargestellt ist.

In Fig. 5 ist ferner eine Aufspannfläche 71 erkennbar, welche ein Werkzeugteil 72 trägt. Die Aufspannfläche 71 weist Zentrierbohrungen 73 auf, in welche beim Schließen des Werkzeugs Zentrierbolzen 74 einfahren.

Der Beistelltisch 67 ist mit der Schiene 66 dem insbesondere aus feststehender Formhälfte 68 und beweglicher Formhälfte 70 gebildeten Werkzeug der Spritzgießmaschine so zugeordnet, daß die Schiene 66 parallel zur Öffnungsrichtung y des Werkzeugs verläuft. Diese Öffnungsrichtung y entspricht auch der Bewegungsrichtung y aus Fig. 1. Bevorzugt wird der Beistelltisch gegenüber dem Spritzgießwerkzeug durch an dessen Tragrahmen od. dgl. nicht gezeigten Streben od. dgl. abgestützt.

Die Schiene 66 wird auf dem Beistelltisch 67 von Klammern 75 gehalten, nach deren Lösen die Schiene 66 ebenfalls in Richtung y auf dem Beistelltisch 67 verschiebbar ist.

Hierdurch kann die Schiene 66 und damit auch das Schlittengehäuse 65 gegenüber dem Werkzeug der Spritzgießmaschine justiert werden. Im übrigen umfaßt das Schlittengehäuse 65 mit Gleitleisten 76 die Schiene 66 bzw. daran angeformte Führungsleisten 77.

In diesem Ausführungsbeispiel befindet sich die Zahnstange 30a zwischen den beiden Führungsleisten 77 an der Schiene 66. Dementsprechend ragt auch der Drehbolzen 27 für den Hebel 25 durch das Schlittengehäuse 65 nach unten heraus, wobei das Zahnrad 28 unterhalb des Schlittengehäuses 65 angeordnet ist.

Hier kämmt das Zahnrad 28 die Zahnstange 30a.

Der Schlitten 3 wird in der oben beschriebenen Art und Weise in einer Rinne 2 im Schlittengehäuse 65 geführt, wobei am Schlitten 3 ebenfalls Schienen 4 vorgesehen sind. Die entsprechenden als Anschlagelemente wirkenden Schraubenbolzen 8 bzw. Anschlagbolzen 9 sind der Übersichtlichkeit halber im vorliegenden Ausführungsbeispiel nicht dargestellt, aber in gleicher Weise, wie oben beschrieben, am Schlitten 3 vorgesehen. Lediglich der Anschlag 13 am Schlittengehäuse 65 ist angedeutet.

Für das Auflaufen der Laufrollen 14 bzw. 15 sind Leistenstücke 32a bzw. 33a vorgesehen, wobei sich diese jedoch an einem entsprechenden Winkelstück, festgelegt an der Schiene 66, befinden. Beide Leistenstücke 32a und 33a halten den oben beschriebenen Abstand b voneinander ein.

In diesem Ausführungsbeispiel ist dem Schlitten 3 ein weiterer Schlitten 79 aufgesetzt, der eine im Verhältnis zum Schlitten 3 übersetzte Bewegung in Richtung x vollführt. Hierzu ist dem Schlittengehäuseboden 80 eine Zahnstange 81 aufgesetzt, welche von einem Zahnrad 82 gekämmt wird. Das Zahnrad 82 lagert an einer Drehachse 83 im Schlitten 3, wobei selbstverständlich der Schlitten 3 nach unten zur Zahnstange 81 hin offen ist. Ferner ist der Schlitten 3 auch nach oben hin zum Schlitten 79 offen, wobei das Zahnrad 82 durch diese Öffnung hindurchgreifen kann und danach mit einer weiteren Zahnstange 84 in Eingriff steht, welch letztere an der Unterseite 85 des Schlittens 79 festgelegt ist.

Das Übersetzungsverhältnis der Schlittenbewegung in Richtung x zu der Bewegung des Schlittens 79 hängt von der Wahl des Durchmessers des Zahnrades 82 ab. Die Bewegung des Schlittens 3 wird im übrigen über den Hebel 25 und die zwischen die beiden Schenkel 21 und 22 eingreifende Führungsrolle bewirkt.

In dem gezeigten Ausführungsbeispiel ist dem schlitten 79 nochmals ein Schienenstück 86 aufgesetzt, welches einen weiteren Schlitten 87 führt. Die Bewegung dieses Schlittens 87 erfolgt ebenfalls in Richtung y und kann beispielsweise pneumatisch erfolgen. Diesem Schlitten 87 ist ein Arm 88 aufgesetzt, der andernends das Handling 89 trägt, welches im vorliegenden Ausführungsbeispiel aus einer Platte 90 mit vier daran festgelegten Saugnäpfen 91 besteht. Mittels dieser Saugnäpfe 91 kann ein nicht näher gezeigtes Werkstück vom Werkzeugteil 72 abgehoben werden.

Nach dem Herausfahren der Schlitten 3, 79 und 87 aus dem Werkzeug der Spritzgußmaschine kann, wenn gewünscht, der Arm 88 um einen bestimmten Winkel geschwenkt und das entnommene Werkstück abgelegt werden. Dies ist in Fig. 4 gezeigt. Der Schlitten 87 dient insbesondere dazu, das Handling 89 näher an das Werkstück bzw. das Werkzeugteil 72 heranzuführen. Deshalb ist er nur dort vorgesehen, wo dieses Annähern des Handlings 89 nicht durch die Bewegung der Schlitten 3 bzw. 79 selbst vollzogen werden kann.

In Fig. 4 ist ferner ein Schlitz 92 im Schlittengehäuse 65 erkennbar, in welchem die Schenkel 21 bzw. 22 geführt sind. Weiterhin wird in dieser Figur auch die Kupplungseinheit 93 zwischen Schlittengehäuse 65 und beweglicher Formhälfte 70 dargestellt. Diese Kupplungseinheit 93 weist ein mit dem Schlittengehäuse 65 fest verbundenes Tragprofil 94 auf, von welchem ein Anschlußbolzen 95 in Richtung beweglicher Formhälfte 70 abragt. Dieser Anschlußbolzen 65 greift in einen von zwei Schenkeln 96 und 97 gebildeten Kanal 98 einer an der beweglichen Formhälfte 70 festgelegten Befestigungslasche 99 ein. Dabei ist der Schenkel 97 kürzer ausgebildet als der Schenkel 96. Ist der Anschlußbolzen 95 ganz ausgefahren, wird er zwischen den beiden Schenkeln 96 und 97 gehalten, so daß das Schlittengehäuse 65 sowohl beim Öffnungshub wie auch beim Schließhub des Werkzeugs mitgeführt wird. Soll dagegen das Schlittengehäuse 65 und über dieses damit die gesamte Robotereinheit den Öffnungshub der beweglichen Formhälfte 70 nicht nachvollziehen, so genügt es, den Anschlußbolzen 95 ein kurzes Stück zurückzuziehen, so daß der kürzere Schenkel 97 an ihm vorbeigleiten kann.

Wird dann versehentlich das Schlittengehäuse 65, beispielsweise manuell, dennoch um ein Stück in Richtung y verschoben, so daß möglicherweise das Handling 89 zum Teil in den Öffnungsbereich beider Formhälften 68 und 70 einfährt, so nimmt dennoch die bewegliche Formhälfte 70 beim Schließen des Werkzeugs über den längeren Schenkel 96 das Schlittengehäuse 65 mit, so daß auf jeden Fall das Handling 89 aus dem Werkzeug gefahren wird. Dies bedeutet ein Höchstmaß an Sicherheit, so daß eine Beschädigung des Handlings 89 in jedem Fall vermieden wird, dennoch aber der Anschluß der Robotereinheit an die Bewegung des Werkzeugs flexibel bleibt.

Diese Vorrichtung arbeitet wie folgt :

In Schließlage des insbesondere aus den Formhälften 68 und 70 gebildeten Werkzeugs der Spritzgußmaschine befindet sich die erfindungsgemäße Vorrichtung in der in Fig. 4 gezeigten Stellung. D. h. das Handling 89 ist aus dem Werkzeug ausgefahren und kann beispielsweise ein entnommenes Werkstück ablegen. Bewegt sich nun die bewegliche Formhälfte 70 in Richtung y und befindet sich der Anschlußbolzen 95 zwischen den beiden Schenkeln 96 und 97, so wird das Schlittengehäuse 65 in Richtung y bewegt, wobei es auf der Schiene 66 geführt ist. Dabei rollt das Zahnrad 28 die Zahnstange 30a ab, so daß der Hebel 25 zum Werkzeug hin geschwenkt wird. In dem Augenblick, wo die Führungsrolle 24 des Hebels 25 zwischen die beiden Schenkel 21 und 22 eingreift, überfährt die Laufrolle 15 die Steuerkante 34 am Leistenstück 32a. Hierdurch wird der Schlitten 3, der bislang zwischen der dem Leistenstück 32a aufgelaufenen Laufrolle 15 und dem am Schlittengehäuse 65 angeschlagenen Schraubenbolzen 8 gehalten wurde, freigegeben. Er wird von der Drehbewegung des Hebels 25 in Richtung x mitgenommen.

Dabei rollt auch das Zahnrad 82 die Zahnstange 81 ab und überträgt so die Bewegung des Schlittens 3 auf die Zahnstange 84 des oberen Schlittens 79. Gleichzeitig oder vorher wurde auch der Arm 88 in seine in Fig. 5 gezeigte Einfahrposition gebracht, so daß das Handling 89 unbehindert in einer sinusförmigen Bewegung zwischen die beiden Formhälften 68 und 70 eingefahren werden kann.

Am Ende dieser sinusförmigen Bewegung hinterläuft die Laufrolle 14 das Leistenstück 33a, wobei gleichzeitig der Anschlagbolzen 9 des Schlittens 3 auf den Anschlag 13 aufläuft. In diesem Augenblick verläßt auch die Führungsrolle 24 die Führungsrinne 23 zwischen den beiden Schenkeln 21 und 22, so daß bei einem weiteren Öffnen der Formhälfte 70 der Schlitten 3 keine weitere Bewegung in Richtung x vollführt. Das Handling 89 hat damit seine definierte Endlage erreicht.

Das Herausführen des Handlings 89 geschieht auf die umgekehrte Weise bis die Laufrolle 15 auf das Leistenstück 32a aufläuft und auch hier eine definierte Endlage erreicht ist.

Mit dieser Vorrichtung ist es möglich, die Zeit zum Entnehmen eines Werkstückes oder beispielsweise zum Einlegen eines Inserts bis auf Null herabzusenken, da der gesamte Einfahr- und Einlege- bzw. Entnahmevorgang während des Öffnens der Formhälfte 70 selbst erfolgt. Lediglich in den Fällen, wenn am Werkzeugteil 72 beispielsweise zusätzliche Reinigungsarbeiten durch das Handling 89 vollführt werden müssen, kann es notwendig sein, daß die Formhälfte 70 bis zum Vollzug der Reinigungsarbeit stillstehen muß. Auch hier ist aber in jedem Fall die Zeit zum Einfahren des Handlings 89 eingespart.

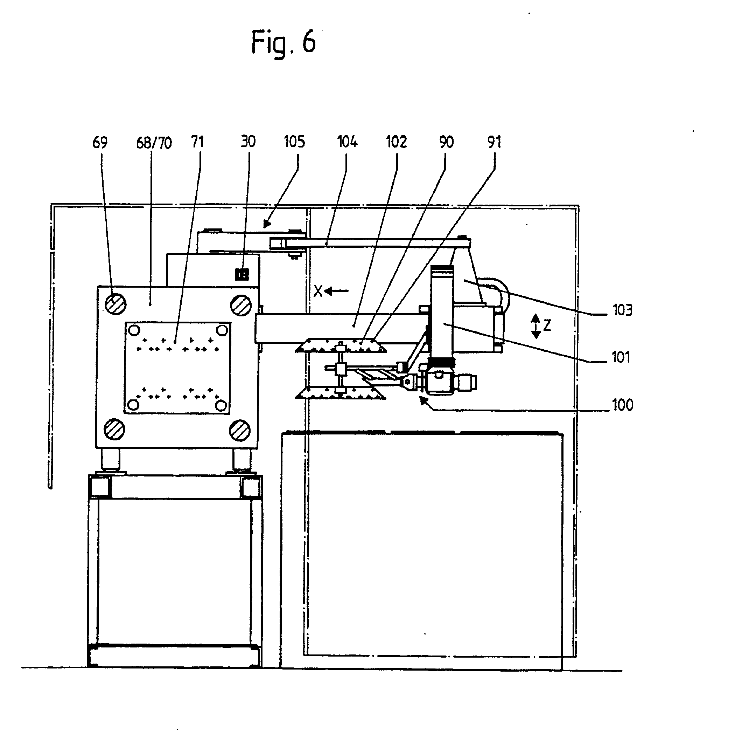

In einem weiteren Ausführungsbeispiel gemäß den Fig. 6 bis 8 ist in Fig. 6 die feststehende oder bewegbare Formhälfte 68 bzw. 70 einer Spritzgußmaschine schematisch dargestellt. Hier besteht das gesamte Greifwerkzeug 100 aus einem, an dem Schlitten 3 befestigten Pneumatikzylinder 101 für die Bewegung der Platten 90 mit beispielsweise Wen Saugnäpfen 91 in der Z-Achse.

Der Schlitten 3 lagert in Richtung x verschiebbar an einer Linearführung 102, welche mit der Formhälfte 68 bzw. 70 verbunden ist. Vom Schlitten 3 ragt eine Befestigungslasche 103 auf, an der eine Führungsstange 104 angelenkt ist, über welche eine Verbindung zu einem Schlittenantrieb 105 hergestellt ist, welcher der Formhälfte 68 bzw. 70 aufsitzt.

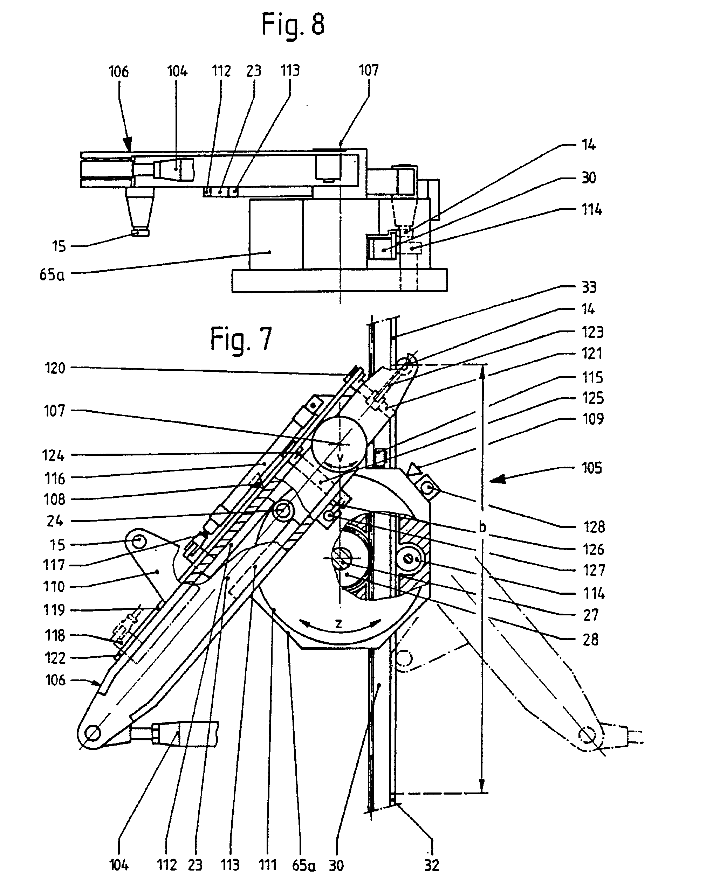

Dieser Schlittenantrieb 105 ist in den Fig. 7 und 8 näher dargestellt. Die Anlenkung der Führungsstange 104 erfolgt an einem Dreharm 106, welcher mit einem Schlittengehäuse 65a verbunden ist. Der Dreharm 106 weist eine Drehpunkt 107 mit dem Schlittengehäuse 65a auf, um welchen der Dreharm 106 in Richtung v verschwenkbar ist. Die bewegung des Dreharmes 106 wird durch nur angedeutete Anschläge 108 und 109 begrenzt.

In diesem Ausführungsbeispiel sind die Laufrollen 14 und 15 an diesem Dreharm 106 angeordnet, wobei sich die Laufrolle 14 einerseits des Drehpunktes 107 im Endbereich des Dreharmes 106 befindet, während die Laufrolle 15 von einer befestigungslasche 110 abragt.

Das Schlittengehäuse 65a wird von der Zahnstange 30 durchsetzt, welche entweder an der feststehenden oder an der beweglichen Formhälfte 68 bzw. 70 festliegt. Dieser Zahnstange 30 ist in dem Schlittengehäuse 65a das Zahnrad 28 zugeordnet, welches die Zahnstange 30 kämmt. Über dem Drehbolzen 27 des Zahnrades 28 erfolgt auch eine Drehung einer Scheibe 111, welche in diesem Ausführungsbeispiel den Hebel 25 ersetzt.

Exzentrisch auf der Scheibe 111 ist die Führungsrolle 24 angeordnet, welche in die Führungsrinne 23 eingreifen kann. In diesem Ausführungsbeispiel wird die Führungsrinne 23 von zwei beabstandeten Kanalstreifen 112 und 113 gebildet. Die Kanalstreifen 112 bzw. 113 liegen an dem Dreharm 106 fest, wobei sie, wie aus Fig. 8 ersichtlich, nach unten abragen.

Zur besseren Führung der Zahnstange 30 in dem Schlittengehäuse 65a sind entsprechende Druckrollen 114 und 115 vorgesehen.

Die Arbeitsweise dieses Ausführungsbeispiels ist die folgende :

In der in Fig. 7 gezeigten Lage des Dreharmes 106 soll sich das Greifwerkzeug zwischen den beiden Formhälten 68 bzw. 70 befinden. Der Dreharm 6 ist dabei vom Anschlag 108 sowie der auf dem Leistenstück 33 abrollenden Laufrolle 14 gehalten. Damit hat der Dreharm 106 eine definierte, Endlage erreicht, da in diesem Zeitpunkt auch die Führungsrolle 24 die Führungsrinne 23 verläßt. Die bewegliche Formhälfte 70 kann weiter geöffnet werden, wobei die Zahnstange 30 weiterhin das Zahnrad 28 und damit auch die Führungsrolle 24 dreht. Hierdurch ist ein Überfahren der Endlage um etwa 270° möglich. Beim Schließen der Formhälfte 70 dreht die Scheibe 111 in entgegengesetzte Richtung, so daß die Führungsrolle 24 wieder, wie gezeigt, in die Führungsrinne 23 eintauchen kann. Bei einer weiteren Drehung nimmt nun die Führungsrolle 24 den Dreharm 106 mit, wobei dieser um den Drehpunkt 107 dreht. Erst in der gestrichelt dargestellten Lage des Dreharms 106, in welcher dieser seinen anderen Endanschlag erreicht, fährt die Fühungsrolle 24 wieder aus der Führungsrinne 23 heraus.

Zu diesem Zeitpunkt hat die andere Laufrolle 15 den freien Abstand zwischen den beiden Leistenstücken 32 und 33 überquert und kann nun dem Leistenstück 32 aufgleiten. Damit wird der Dreharm 106 zwischen dem Anschlag 109 und dem Leistenstück 32 festgelegt Zu diesem Zeitpunkt ist das Greifwerkzeug 100 vollständig aus den beiden Formhälften 86 und 70 herausgefahren.

Auch in diesem Ausführungsbeispiel sind weitere Einrichtungen zum Entkoppeln dieses Schlittenantriebs 105 von der Bewegung der Formhälfte 86 bzw. 70 vorgesehen. Hierzu befindet sich seitlich an dem Dreharm 106 ein Pneumatikzylinder 116, dessen Kolbenstange 117 über einen Verbindungswinkel 118 mit den Kanalstreifen 112 verbunden ist. Durch das Ausfahren der Kolbenstange 117 wird dieser Kanalstreifen 112 aus dem Eingriffsbereich mit der Führungsrolle 24 gebracht, wie dies in Fig. 7 gestrichelt dargestellt ist. Der Kanalstreifen 113 verbleibt dagegen an seiner vorgesehenen Stelle, so daß in jedem Fall bei einer Drehung der Scheibe 111 der Dreharm 106 in seine gestrichelt dargestellte Lage verbracht wird, in welcher das Greifwerkzeug aus den Formhälften 86 bzw. 70 herausgefahren ist. Ein Schwenken des Dreharms 106 ist dagegen nicht mehr möglich, da der Kanalstreifen 112 aus dem Eingriffsbereich der Führungsrolle 24 verbracht worden ist.

In manchen Anwendungsfällen ist es ferner notwendig, den Dreharm 106 in der gestrichelt gezeigten Position, d. h. bei ausgefahrenem Greifwerkzeug 100 festzuhalten.

Hierzu ist vorgesehen, daß der Verbindungswinkel 118 vor Erreichen seiner ausgefahrenen Endlage auf einen von einem Kulissenstreifen 119 abragenden Winkel 122 trifft und den Kulissenstreifen 119 ein kurzes Stück mitnimmt. Anderenends dieses Winkels 122 ist der Kulissenstreifen 119 gelenkig mit einem Drehhebel 120 verbunden. Dieser Drehhebel 120 ist einem Drehbolzen 121 angeformt, welcher den Dreharm 106 durchsetzt. Vom Drehbolzen 121 ragt wiederum eine Hubstange 123 ab, über welche die Laufrolle 14 angehoben werden kann. Damit gerät die Laufrolle 14 außer Eingriff mit dem Leistenstück 33, so daß in dieser Beziehung der Dreharm 106 frei beweglich ist.

In der gleichen Form ist mit dem Kulissenstreifen 119 ein weiterer Drehhebel 124 sowie Drehbolzen 125 verbunden. Jedoch ist hier entgegengesetzt zu dem Drehhebel 124 anderenends des Drehbolzens 125 ein Hebel 126 vorgesehen, der mit einer Rastklinke 127 in Verbindung steht. Durch diese Anordnung wird gewährleistet, daß bei Bewegung des Drehhebels 124 mit dem Kulissenstreifen 119 die Rastklinke 127 abgesenkt wird. Dabei rastet diese Rastklinke 127 in eine Aufnahme 128 ein, bzw. die Stirnfläche der Rastklinke ist, nicht gezeigt, abgeschrägt ausgebildet, so daß sie an einer Wand der Aufnahme 128 aufgleiten und danach in die Aufnahme 128 einklinken kann. Hierdurch wird der Dreharm 106 sicher gehalten.

Um ihn wieder in den Arbeitsgang der Spritzgießmaschine einzuschalten, wird die Kolbenstange 117 in den Pneumatikzylinder 116 eingezogen, so daß die Kulisse in ihre Ausgangsstellung zurückkehrt.

Damit wird wiederum die Laufrolle 14 abgesenkt und die Rastklinke 127 aus der Aufnahme 128 angehoben. Ebenso kehrt auch der Kanalstreifen 112 in seine Ausgangslage zurück. Damit gelangt er in den Eingriffsbereich der Führungsrolle 24, so daß der Dreharm 106 mitgenommen wird und damit der Schlittenantrieb 105 in Gang gesetzt ist.

**Ansprüche**

1. Vorrichtung zum Umwandeln einer Drehbewegung eines exzentrisch um eine Drehachse angeordneten Mitnehmers in eine Linearbewegung eines Schlittens mit einer gesicherten Führung während der Linearbewegung und mit festgelegten Endlagen , wobei zum linearen Führen des Schlittens der als Führungsrolle od. dgl. ausgebildete Mitnehmer in eine Führungsrinne eingreift, welche er jedoch bei Erreichen der Schlittenendlage verläßt, dadurch gekennzeichnet, daß am Schlitten (3) oder an einem mit dem Schlitten (3) verbundenen Dreharm (106) zwei Laufrollen (14, 15) od. dgl. Anschläge vorgesehen sind, welche in den Endlagen des Schlittens (3) jeweils einem Leistenstück (32, 33) aufgleiten und dann an diesem anliegen, wobei die Leistenstücke (32, 33) im Verhältnis zur Bewegungsrichtung (x) des Schlittens ortsfest angeordnet sind und unter Einhaltung eines Abstandes (b) die Laufrollen (14, 15) während der Linearführung des Schlittens (3) freigeben.

2. Vorrichtung nach Anspruch 1, dadurch gekennzeichnet, daß in den festgelegten Endlagen zum Halten der Laufrollen (14, 15) an dem jeweiligen Leistenstück (32, 33) jeweils in Bewegundsrichtung der Laufrolle (14, 15) zum Leistenstück (32, 33) hin gerichtete weitere Anschläge (14a, 15a, 8, 9, 108, 109) vorgesehen sind.

3. Vorrichtung nach Anspruch 3, dadurch gekennzeichnet, daß den Laufrollen (14, 15) jeweils eine weitere Laufrolle (14a, 15a), Schiene od. dgl. zugeordnet ist, die auf der anderen Seite der jeweiligen Laufrolle (14, 15) dem Leistenstück (32 bzw. 33) anliegt.

4. Vorrichtung nach Anspruch 2, dadurch gekennzeichnet, daß die weiteren Anschläge als am Schlitten (3) festgelegte Anschlagbolzen (8, 9) ausgebildet sind, welche auf einen ortsfesten Anschlag (13 bzw.1) treffen.

5. Vorrichtung nach Anspruch 4, dadurch gekennzeichnet, daß die Anschlagbolzen (8, 9) verstellbar ausgebildet sind.

6. Vorrichtung nach Anspruch 4 oder 5, dadurch gekennzeichnet, daß die Leistenstücke (32, 33) senkrecht zur Bewegungsrichtung (x) des Schlittens (3) angeordnet sind.

7. Vorrichtung nach wenigstens einem der Ansprüche 1 bis 6, dadurch gekennzeichnet, daß auf die Drehachse (27) zum Bewegen der Führungsrolle (24) ein Zahnrad (28) aufgesetzt ist, welches mit einer Zahnstange (30) kämmt, wobei entweder die Zahnstange (30) im Verhältnis zum Zahnrad (28) oder das Zahnrad (28) im Verhältnis zur Zahnstange (30) bewegbar ist.

8. Vorrichtung nach Anspruch 7, dadurch gekennzeichnet, daß die Leistenstücke (32, 33) mit der Zahnstanze (30) verbunden sind.

9. Vorrichtung nach wenigstens einem der Ansprüche 1 bis 8, dadurch gekennzeichnet daß im oder am Schlitten (3) eine Einrichtung (36) zum sichern des Schlittens (3) in einer Endlage vorgesehen ist.

10. Vorrichtung nach Anspruch 9, dadurch gekennzeichnet, daß die Einrichtung (36) zumindest aus einem Rastbolzen (39) besteht, der in Rastlage mit einer Klinke (44) zusammenwirkt.

11. Vorrichtung nach Anspruch 10, dadurch gekennzeichnet, daß der Rastbolzen (39) mit einem Querbolzen (50) auf einem von einem Profilstreifen (47) gebildeten Auflager (49) aufliegt und von diesem gegen die Kraft einer Feder (41) anhebbar ist.

12. Vorrichtung nach Anspruch 11, dadurch gekennzeichnet, daß der Profilstreifen (47) einen Drehpunkt (48) mit dem Schlitten (3) und ferner in seinem weiteren Verlauf ein Langloch aufweist, das von einem exzentrisch drehbaren Bolzen (45) durchsetzt ist.

13. Vorrichtung nach wenigstens einem der Ansprüche 1 bis 12, dadurch gekennzeichnet, daß zumindest eine der Laufrollen (14) anhebbar ist.

14. Vorrichtung nach Anspruch 13 dadurch gekennzeichnet, daß der Profilstreifen (47) über ein Gelenk (52) mit einem weiteren Streifen (51) verbunden ist, der an seinem fernen Ende einen Drehpunkt (53) zum Schlitten (3) hat und ein dazwischen liegendes Langloch (54) aufweist, in welches ein mit der Laufrolle (14) verbundener Querbolzen (55) eingreift.

15. Vorrichtung nach wenigstens einem der Ansprüche 19 bis 14, dadurch gekennzeichnet, daß die Führungsrinne (23) von zwei Schenkeln (21, 22) gebildet ist, wobei ein Schenkel (22) anhebbar ist.

16. Vorrichtung nach Anspruch 15 dadurch gekennzeichnet, daß das Anheben des Schenkels (22) über den exzentrisch drehbaren Bolzen (45) erfolgt.

17. Vorrichtung nach wenigstens einem der Ansprüche 1 bis 16, dadurch gekennzeichnet, daß dem Schlitten (3) ein weiterer Schlitten (79) aufgesetzt ist, wobei ein weiteres Zahnrad (82) an dem Schlitten (3) drenbar angeordnet ist, welches einerseits mit einer in Bewegungsrichtung (x) des Schlittens und im Verhältnis zu diesem festliegenden Zahnstange (81) und andererseits mit einer am weiteren Schlitten (79) festliegenden Zahnstange (84) kämmt.

18. Vorrichtung nach wenigstens einem der Ansprüche 1 bis 8, dadurch gekennzeichnet, daß der Schlitten (3) über eine Führungsstange (104) od. dgl. mit dem Dreharm (106) verbunden ist, an welchem die Laufrolle (14,15) od. dgl. Anschläge vorgesehen sind.

19. Vorrichtung nach Anspruch 18, dadurch gekennzeichnet, daß der Dreharm (106) einen Drehpunkt (107) in Bezug auf das Schlittengehäuse (65a) aufweist und schwenkbar ist.

20. Vorrichtung nach Anspruch 19, dadurch gekennzeichnet, daß mit dem Dreharm (106) zwei Kanalstreifen (112,113) verbunden sind, welche die Führungsrinne (23) für die Führungsrolle (24) bilden.

21. Vorrichtung nach Anspruch 20, dadurch gekennzeichnet, daß der eine Kanalstreifen (112) aus dem Eingriffsbereich der Führungsrolle (24) führbar ist.

22. Vorrichtung nach Anspruch 21, dadurch gekennzeichnet, daß der Kanalstreifen (112) mit einer Kolbenstange (117) eines Zylinders (116) verbunden ist.

23. Vorrichtung nach Anspruch 22, dadurch gekennzeichet, daß der Zylinder (116) am Dreharm (106) befestigt ist.

24. Vorrichtung nach Anspruch 22 oder 23, dadurch gekennzeichnet, daß über den Zylinder (116) bzw. dessen Kolbenstange (117) auch ein Kulissentreifen (119) bewegbar ist, welcher die eine Laufrolle (14) und oder ein Rastklinke (27) anhebt oder absenkt.

25. Vorrichtung nach Anspruch 24, dadurch gekennzeichnet, daß der Kulissenstreifen (119) über einen Drehhebel (120) mit einem Drehbolzen (121) verbunden ist, welcher über eine Hubstange (123) mit der Laufrolle (14) in Verbindung steht.

26. Vorrichtung nach einem der Ansprüche 24 oder 25, dadurch gekennzeichnet, daß der Kulissenstreifen (119) über einen weiteren Drehhebel (124) und einen Drehbolzen (125) sowie einen auf der anderen Seite des Drehhebels (124) angeordneten Hebel (126) mit der Rastklinke (127) in verbindung steht.

27. Vorrichtung nach wenigstens einem der Ansprüche 24 bis 26, dadurch gekennzeichnet, daß der Rastklinke (127) am Schlittengehäuse (65a) eine Aufnahme (128) zugeordnet ist.

28. Werkzeugmaschine zum Herstellen oder Bearbeiten von Werkstücken, wie Spritzgießmaschine, Presse, Stanze od. dgl., mit zwei relativ zueinander bewegbaren Werkzeugteilen, wobei zumindest einem Werkzeugteil eine Vorrichtung nach wenigstens einem der Ansprüche 1 bis 27 zugeordnet ist, dadurch gekennzeichnet, daß die Vorrichtung zumindest mit einem Werkzeugteil (72) bzw. dessen Träger (70, 68) fest bzw. über eine Kupplungseinheit (93) lösbar verbunden ist.

29. Werkzeugmaschine zum Herstellen oder Bearbeiten von Werkstücken, wie Spritzgießmaschine, Presse, Stanze od. dgl., mit zwei relativ zueinander bewegbare Werkzeugteilen, wobei zumindest einem Werkzeugteil eine Vorrichtung nach wenigstens einem der Ansprüche 1 bis 27 zugeordnet ist, dadurch gekennzeichnet, daß der Schlitten (3), an dem gegebenenfalls eine Greifeinrichtung (100) befestigt ist, über eine entsprechende Führung (102) an einer Formhälfte (68,70) festliegt und über eine Führungsstange (104) od. dgl. mit dem Dreharm (106) verbunden ist, welcher über das Schlittengehäuse (65a) ebenfalls an der Formhälfte (68, 70) angeordnet ist.

30. Werkzeugmaschine nach Anspruch 29, dadurch gekennzeichnet, daß die Zahnstange (30) das Schlittengehäuse (65a) durchquert und dort das Zahnrad (28) kämmt.

## Claims

1. Device for converting rotary movement of a drive element arranged eccentrically around a rotation axis into a linear movement of a slide with assured guidance during the linear movement and with fixed end positions, wherein the drive element for the linear guidance of the slide and constructed in the form of a guide roll or the like engages in a guide groove which it leaves on reaching the end position of the slide, characterised in that, on the slide (3) or on a rotary arm (106) connected to the slide (3) there are provided two transport rollers (14, 15) or similar stops which each slide on a bar (32, 33) in the end positions of the slide (3) and then rest thereon, wherein the bars (32, 33) are arranged stationarily relative to the direction of movement (x) of the slide and release the transport rollers (14, 15) during the linear guidance of the slide (3) while maintaining a gap (b).

2. Device according to claim 1, characterised in that further stops (14a, 15a, 8, 9, 108, 109) directed in the direction of movement of the transport roller (14, 15) toward the bar (32, 33) are provided in the fixed end positions for holding the transport rollers (14, 15) on the respective bar (32, 33) in each case.

3. Device according to claim 3, characterised in that the transport rollers (14, 15) are each allocated a further transport roller (14a, 15a), rail or the like which rests on the bar (32 or 33) on the other side of the respective transport roller (14, 15).

4. Device according to claim 2, characterised in that the further stops are constructed as stop bolts (8, 9) which are fixed on the slide (3) and strike a stationary stop (13 or 1).

5. Device according to claim 4, characterised in that the stop bolts (8, 9) are constructed adjustably.

6. Device according to claim 4 or 5, characterised in that the bars (32, 33) are arranged perpendicularly to the direction of movement (x) of slide (3).

7. Device according to at least one of claims 1 to 6, characterised in that a gearwheel (28) meshing with a rack (30) is placed onto the rotation axis (27) for moving the guide roll (24), either the rack (30) being movable relative to the gearwheel (28) or the gearwheel (28) being movable relative to the rack (30).

8. Device according to claim 7, characterised in that the bars (32, 33) are connected to the rack (30).

9. Device according to at least one of claims 1 to 8, characterised in that an arrangement (36) for securing the slide (3) in one end position is provided in or on the slide (3).

10. Device according to claim 9, characterised in that the arrangement (36) consists of at least one catch bolt (39) which co-operates with a pawl (44) in the catch position.

11. Device according to claim 10, characterised in that the catch bolt (39) rests with a transverse bolt (50) on a support (49) formed by a profile strip (47) and can be lifted from it against the force of a spring (41).

12. Device according to claim 11, characterised in that the profile strip (47) has a pivot (48) with the slide (3) and also has a slot further on in its course, this slot being penetrated by an eccentrically rotatable bolt (45).

13. Device according to at least one of claims 1 to 12, characterised in that at least one of the transport rollers (14) can be lifted.

14. Device according to claim 13, characterised in that the profile strip (47) is connected via a joint (52) to a further strip (51) which has, at its far end, a pivot (53) relative to the slide (3) and a slot (54) which is located therebetween and into which a transverse bolt (55) connected to the transport roller (14) engages.

15. Device according to at least one of claims 9 to 14, characterised in that the guide groove (23) is formed by two arms (21, 22) of which one arm (22) can be lifted.

16. Device according to claim 15, characterised in that the arm (22) is lifted via the eccentrically rotatable bolt (45).

17. Device according to at least one of claims 1 to 16, characterised in that a further slide (79) is placed on the slide (3), wherein a further gearwheel (82) is rotatably arranged on the slide (3) and meshes, on the one hand, with a rack (81) which is fixed in the direction of movement (x) of the slide and in relation thereto and, on the other hand, with a rack (84) fixed on the further slide (79).

18. Device according to at least one of claims 1 to 8, characterised in that the slide (3) is connected via a guide rod (104) or the like to the rotary arm (106) on which the transport rollers (14, 15) or similar stops are provided.

19. Device according to claim 18, characterised in that the rotary arm (106) has a pivot (107) relative to the slide housing (65a) and is pivotal.

20. Device according to claim 19, characterised in that two channel strips (112, 113) forming the guide groove (23) for the guide roll (24) are connected to the rotary arm (106).

21. Device according to claim 20, characterised in that one channel strip (112) can be guided out of the region of engagement of the guide roll (24).

22. Device according to claim 21, characterised in that the channel strip (112) is connected to a piston rod (117) of a cylinder (116).

23. Device according to claim 22, characterised in that the cylinder (116) is fastened on the rotary arm (106).

24. Device according to claim 22 or 23, characterised in that a link strip (119) which raises or lowers one transport roller (14) and or a catch pawl (27) can also be moved via the cylinder (116) or its piston rod (117).

25. Device according to claim 24, characterised in that the link strip (119) is connected via a rotary lever (120) to a rotary bolt (121) which is connected via a lifting rod (123) to the transport roller (14).

26. Device according to one of claims 24 or 25, characterised in that the link strip (119) is connected via a further rotary lever (124) and a rotary bolt (125) as well as a lever (126) arranged on the other side of the rotary lever (124) to the catch pawl (127).

27. Device according to at least one of claims 24 to 26, characterised in that the catch pawl (127) on the slide housing (65a) is allocated a receiver (128).

28. Machine tool for the production or processing of workpieces, such as an injection moulding machine, press, punch or the like, with two tool parts which are movable relative to one another, wherein at least one tool part is allocated a device according to at least one of claims 1 to 27, characterised in that the device is rigidly connected or detachably connected via a coupling unit (93) to at least one tool part (72) or its carrier (70, 68).

29. Machine tool for the production or processing of workpieces, such as an injection moulding machine, press, punch or the like, with two tool parts which are movable relative to one another, wherein at least one tool part is allocated a device according to at least one of claims 1 to 27, characterised in that the slide (3) on which a gripper (100) is optionally fastened, is fixed on a mould half (68, 70) via a corresponding guide means (102) and is connected via a guide rod (104) or the like to the rotary arm (106) also arranged on the mould half (68, 70) via the slide housing (65a).

30. Machine tool according to claim 29, characterised in that the rack (30) passes transversely through the slide housing (65a) and there meshes with the gearwheel (28).

## Revendications

1. Dispositif de transformation d'un mouvement de rotation d'un entraîneur excentré placé sur un axe de rotation en un mouvement linéaire d'un chariot avec un guidage sûr pendant le mouvement linéaire et avec des positions finales établies l'entraîneur en forme de rouleau de guidage ou analogue pour le déplacement linéaire du chariot étant en prise dans une rainure de guidage qu'il quitte lorsqu'il atteint la position finale du chariot, caractérisé en ce qu'on a prévu sur le chariot (3) ou sur un bras rotatif (106) relié au chariot (3) deux galets de roulage (14, 15) ou taquets analogues qui glissent dans les positions finales du chariot (3) chacune sur un listel (32, 33) et reposent sur lui, les listels (32, 33) étant fixes par rapport au sens de déplacement (x) du chariot et libèrant les galets de roulage (14, 15) en maintenant un écartement (b) pendant le déplacement linéaire du chariot (3).

2. Dispositif selon la revendication 1, caractérisé en ce que dans les positions finales pour le maintien des galets de roulage (14, 15) sur le listel correspondant (32, 33), on a prévu d'autres butées (14a, l5a, 8, 9, 108, 109) dans le sens de déplacement des galets de roulage (14, 15) vers le listel (32, 33).

3. Dispositif selon la revendication 3 caractérisé en ce qu'à chaque galet de roulage (14, 15) correspond un autre galet de roulage (14a, 15a) un rail ou analogue, qui repose de l'autre côté de chaque galet de roulage (14, 15) par rapport au listel (32 ou 33).

4. Dispositif selon la revendication 2, caractérisé en ce qu'on a réalisé les autres butées sur le chariot (3), sous forme de goujons de butée fixes (8, 9) qui rencontrent une butée fixe (13 ou 1).

5. Dispositif selon la revendication 4, caractérisé en ce que les goujons de butée (8, 9) sont réalisés de façon à être réglables.

6. Dispositif selon la revendication 4 ou 5, caractérisé en ce qu'on dispose les listels (32, 33) perpendiculairement au sens de déplacement (x) du chariot (3).

7. Dispositif selon au moins l'une des revendications 1 à 6, caractérisé en ce qu'on a placé sur l'axe de rotation (27) pour déplacer le galet de guidage (24) une roue dentée (28), qui est en prise avec une tige dentée (30), soit la tige dentée (30) étant mobile par rapport à la roue dentée (28), soit la roue dentée (28) étant mobile par rapport à la tige dentée (30).

8. Dispositif selon la revendication 7, caractérisé en ce que les listels (32, 33) sont solidaires de la tige dentée (30).

9. Dispositif selon au moins l'une des revendications 1 à 8, caractérisé en ce qu'on a prévu dans ou sur le chariot (3) un dispositif (36) pour verrouiller le chariot (3) dans une position finale.

10. Dispositif selon la revendication 9 caractérisé en ce que le dispositif (36) comprend au moins un goujon d'arrêt (39), qui coopère en position d'arrêt avec un cliquet (44).

11. Dispositif selon la revendication 10, caractérisé en ce que le goujon d'arrêt (39) repose avec un goujon transversal (50) sur un appui (49) formé par une bande profilée (47), et que celui-ci peut soulever le goujon d'arrêt en opposition à la force d'un ressort (41).

12. Dispositif selon la revendication 11, caractérisé en ce que la bande profilée (47) présente un centre de rotation (48) avec le chariot (3) et en outre dans son autre sens un trou oblong qu'un goujon (45) traverse, en pouvant tourner de manière excentrée.

13. Dispositif selon au moins l'une des revendications 1 à 12, caractérisé en ce qu'au moins l'un des galets de roulage (14) peut se soulever.

14. Dispositif selon la revendication 13, caractérisé en ce qu'on relie la bande profilée (47) par une articulation (52) à une autre bande (51), qui a un centre de rotation (53) à son extrémité éloignée vers le chariot (3) et présente un trou oblong (54) situé entre les deux, dans lequel est en prise un goujon transversal (55) relié au galet de roulage (14).

15. Dispositif selon au moins l'une des revendications 9 à 14, caractérisé en ce que la rainure de guidage (23) est formée de deux pattes (21, 22), une patte (22) pouvant se soulever.

16. Dispositif selon la revendication 15, caractérisé en ce que la levée de la patte (22) se fait par le goujon (45) excentrique rotatif.

17. Dispositif selon au moins l'une des revedications 1 à 16, caractérisé en ce qu'on place sur le chariot (3) un autre chariot (79), une autre roue dentée (82) étant placée en rotation sur le chariot (3) qui entraîne d'une part dans un sens de déplacement (x) du chariot et fixée par rapport à celui-ci la tige dentée (81) et d'autre part une tige dentée (84) fixée sur l'autre chariot (79).

18. Dispositif selon au mois l'une des revendications 1 à 8 caractérisé en ce qu'on relie le chariot (3) par une tige de guidage (104) ou analogue au bras rotatif (106) sur lequel on a prévu les galets de roulage (14, 15) ou des butées analogues.

19. Dispositif selon la revendication 18, caractérisé en ce que le bras rotatif (106) présente un centre de rotation (107) par rapport au boîtier de chariot (65a) et peut pivoter.

20. Dispositif selon la revendication 19 caractérisé en ce que deux bandes canal (112, 113) sont solidaires du bras rotatif (106) et forment la rainure de guidage (23) du galet de roulage (24).

21. Dispositif selon la revendication 20, caractérisé en ce que le galet de roulage (24) peut rouler avec sa zone de prise sur l'une des bandes canal (24).

22. Dispositif selon la revendication 21 caractérisé en ce que la bande canal (112) est solidaire d'une tige de piston (117) d'un cylindre (116).

23. Dispositif selon la revendication 22, caractérisé en ce que le cylindre (116) est fixé au bras rotatif (106).

24. Dispositif selon la revendication 22 ou 23, caractérisé en ce qu'au-dessus du cylindre (116) ou de sa tige de piston (117) une bande coulissante est aussi mobile (119), qui soulève ou abaisse l'un des galets de roulage (14) ou un cliquet de verrouillage (27).

25. Dispositif selon la revendication 24, caractérisé en ce que la bande coulissante (119) est reliée à un goujon pivot (121) par l'intermédiaire d'un levier rotatif (120), qui est relié par une tige de course (123) au galet de roulage (14).

26. Dispositif selon l'une des revendications 24 ou 25, caractérisé en ce que la bande coulissante (119) est reliée au cliquet de verrouillage (127) par l'intermédiaire d'un autre levier rotatif (124) et d'un goujon pivot (125) ainsi que d'un levier (126) disposé de l'autre côté du levier rotatif (124).

27. Dispositif selon au moins l'une des revendications 24 à 26, caractérisé en ce qu'au cliquet de verrouillage (127) sur le boîtier de chariot (65a) correspond un logement (128).

28. Machine outil de production ou d'usinage de pièces telle que presse d'injection, presse, estampeuse ou analogue, avec deux pièces d'outil mobiles l'une par rapport à l'autre, dans laquelle au moins une pièce d'outil comporte un dispositif selon au moins l'une des revendications 1 à 27, caractérisée en ce que le dispositif est relié fixement, ou de façon démontable à l'aide d'un accouplement (93) à au moins une pièce d'outil (72) ou son support (70, 68).

29. Machine outil de production ou d'usinage de pièces telle que presse d'injection, presse, estampeuse ou analogue, avec deux pièces d'outil mobiles l'une par rapport à l'autre, dans laquelle au moins une pièce d'outil comporte un dispositif selon au mois l'une des revendications 1 à 27, caractérisée en ce que le chariot (3), sur lequel on fixe le cas échéant un dispositif de prise (100), repose sur un guidage correspondant (102) sur une moitié de moule (68, 70), et il est relié par une tige de guidage (104) ou analogue à un bras rotatif (106), qui est adapté également par l'intermédiaire du boîtier de chariot (65a) à la moitié de moule.

30. Machine outil selon la revendication 29, caractérisée en ce que la tige dentée (30) traverse le boîtier de chariot (65a) et y engrène la roue dentée (28).

Fig.2

Fig.1

Schnitt A - A

# Fig. 3

53 36 38 54 55 19 58 45 56 46 20 59 47 3 42 41 50

49
39
6
40
43
7

51 9 10 12 14 37 52 60 15 32 30 13 48 2 44 1 8

Fig. 4

EP 0 293 402 B1

Fig. 5

# Fig. 6

# Fig. 8

106  104  112  23  113  107

14
30
114

15
65a

# Fig. 7

120
107
124
116
108
24
15
117
110
119
118
122
106

33
14
123
121
115
125
109

105

128
126
127
114
27
28

b

z

104  112  23  113  111  65a  30  32